# EUROPÄISCHE PATENTSCHRIFT

(11) **EP 1 656 229 B1**
(45) Veröffentlichungstag und Bekanntmachung des Hinweises auf die Patenterteilung: **26.10.2011**
(21) Anmeldenummer: 04739850.8
(22) Anmeldetag: 12.06.2004
(51) Int. Cl.: B23B 1/00

(54) **VERFAHREN ZUR MIKROZERSPANUNG VON METALLISCHEN WERKSTOFFEN**
METHOD FOR MICROMACHINING METALLIC MATERIALS
PROCEDE DE MICRO-ENLEVEMENT DE COPEAUX DE MATERIAUX METALLIQUES

(30) Priorität: 24.07.2003 DE 10333860
(43) Veröffentlichungstag der Anmeldung: 17.05.2006
(73) Patentinhaber: STIFTUNG INSTITUT FÜR WERKSTOFFTECHNIK, 28359 Bremen (DE)
(72) Erfinder: DONG, Juan, 28199 Bremen (DE); GLÄBE, Ralf, 28359 Bremen (DE); MEHNER, Andreas, 28359 Bremen (DE); BRINKSMEIER, Ekkard, 28213 Bremen (DE); MAYR, Peter, 27711 Osterholz-Scharmbeck (DE)
(74) Vertreter: Aulich, Martin
(86) Internationale Anmeldenummer: PCT/EP2004/006365
(87) Internationale Veröffentlichungsnummer: WO 2005/019488

(56) Entgegenhaltungen:
- GB-A- 2 384 734
- DATABASE CA [Online] CHEMICAL ABSTRACTS SERVICE, COLUMBUS, OHIO, US; GRUBY, S. V. ET AL: "Investigation of precision surfaces after diamond micromachining" XP002318682 gefunden im STN Database accession no. 125:306436 & VESTNIK MASHINOSTROENIYA , (7), 19-24 CODEN: VMASAV; ISSN: 0042-4633, 1996,

## Beschreibung

Die vorliegende Erfindung betrifft ein Verfahren zum verschleißarmen Mikrozerspanen von Werkstücken aus Metall oder Metalllegierungen, insbesondere Stahl, wobei ein Werkstück mit zumindest einer ein Diamantwerkzeug aufweisenden Zerspanungsvorrichtung, insbesondere einer Ultrapräzisionsdreh-, -fräs- oder -schleifmaschine mikrozerspanend bearbeitet wird. Die Erfindung betrifft des Weiteren ein Werkstück aus einem Metall der IV. - VIII. Nebengruppen oder einer Metalllegierung, insbesondere Stahl mit durch Mikrozerspanung bearbeiteter Oberfläche.

In der Mikrozerspanungstechnik werden im Stand der Technik hauptsächlich Werkstücke aus Nichteisenmetallen bearbeitet. Dabei werden in der sogenannten Ultrapräzisionsbearbeitung Vorrichtungen mit Schneidwerkzeugen aus monokristallinem Diamant eingesetzt. Diamanten haben den Vorteil, dass sie eine hohe Wärmeleitfähigkeit, einen geringen Reibwert, vor allem aber eine extrem große Härte aufweisen, so dass es möglich ist, in Werkstücke aus Nichteisenmetallen mit diesen Diamanten relativ verschleißarm Oberflächenstrukturen mit Genauigkeiten im Mikrometer- und Submikrometerbereich einzubringen, wobei sich die Oberflächenrauheiten bei der Mikrozerspanung im Bereich einiger Nanometer bewegen. Der Begriff "verschleißarm" bezieht sich in diesem Zusammenhang auf das Schneidwerkzeug selbst, d. h. den Diamanten, dessen Abnutzung den gesamten Bearbeitungsprozess begrenzt.

Schon seit Anbeginn der Mikrozerspanungstechnik besteht das Bedürfnis, die Palette der bearbeitbaren Werkstoffe zu erweitern. Es besteht insbesondere das Bedürfnis, Stahl in all seinen Materialvariationen zu verwenden, um insbesondere die Härte, Verschleiß-, Temperatur- und Korrosionsbeständigkeit legierter und unlegierter Stähle nutzen zu können. Die Mikrozerspanung von Stahl bringt im Stand der Technik äußerst große Probleme mit sich, da die eingesetzten Diamantwerkzeuge bei der Bearbeitung von Stahl einem so hohen Verschleiß unterliegen, dass es unwirtschaftlich ist, die Oberflächen von Stahlwerkstücken durch Mikrozerspanung zu bearbeiten.

Der hohe Verschleiß des Diamantwerkzeugs hat neben der Härte des zu bearbeitenden Stahls vor allem die Ursache, dass auf Grund einer chemischen Reaktion beim Kontakt des Diamanten mit im Stahl vorhandenem Eisen (oder Legierungselementen) die obersten Atomlagen des Diamanten in thermodynamisch stabiles, aber weiches Graphit umgewandelt werden.

Auf dem Gebiet der Mikrozerspanung wird seit Jahren intensiv geforscht, um die Problematik des hohen Verschleißes der eingesetzten Diamantwerkzeuge in den Griff zu bekommen. Dabei wurden verschiedene Ansätze verfolgt. Unter anderem wurde der Bewegung des Diamantwerkzeugs eine Ultraschallanregung überlagert, um die Kontaktzeit zwischen Diamant und zu zerspanendem Werkstück so kurz wie möglich zu halten. Die verschiedenen Ansätze führten allerdings bisher noch nicht zu einem Durchbruch im Sinne einer verbreiteten technischen Anwendung.

Aufgabe der vorliegenden Erfindung ist es daher, ein Verfahren zum Mikrozerspanen von Werkstücken aus Metall oder Metaillegierungen, insbesondere Stahl anzugeben, bei dem der Verschleiß des Diamantwerkzeugs gegenüber dem bisher im Stand der Technik bekannten Verfahren deutlich reduziert wird. Weiter ist es Aufgabe der Erfindung, Werkstücke aus Metall oder Metalilegierungen, insbesondere Stahl anzugeben, die mit einem verschleißarmen Mikrozerspanungsverfahren bearbeitet wurden.

Die erfindungsgemäße Aufgabe wird gelöst durch ein Verfahren zum verschleißarmen Mikrozerspanen von Werkstücken aus Metall oder Metalllegierungen, insbesondere Stahl, wobei ein Werkstück mit zumindest einer ein Diamantwerkzeug aufweisenden Zerspanungsvorrichtung, insbesondere einer Ultrapräzisionsdreh-, -fräs- oder -schleifmaschine mikrozerspanend bearbeitet wird, wobei das Werkstück vor dem Mikrozerspanen in einem ersten Schritt einer thermochemischen Randschichtbehandlung unterworfen wird, und wobei in einem zweiten Schritt die thermochemisch behandelte Randzone des Werkstücks mit der Zerspanungsvorrichtung bearbeitet wird.

Unter dem Begriff "Randzone" des Werkstücks wird dabei der gesamte oberflächennahe Bereich des Werkstücks verstanden, der durch thermochemische Verfahren beeinflussbar ist.

Der Haupteffekt, d.h. die größte Verschleißreduküon wird mit dem erfindungsgemäßen Verfahren dann erzielt, wenn die Tiefe von mit dem Diamantwerkzeug in das Werkstück eingebrachten Schnitten geringer ist als die Dicke der thermochemisch behandelten Randzonen, denn dann wird vollständig und ausschließlich in dieser Randzone gearbeitet. Das Diamantwerkzeug steht in diesem Fall nur mit dem behandelten Randzonenmaterial in Kontakt. Es liegt aber auch im Rahmen der Erfindung, mit dem Diamantwerkzeug etwas in den unbehandelten Bereich des Werkstücks vorzudringen, was allerdings auf Kosten der erreichbaren Verschleißreduktion geht.

Es ist zur Zeit noch nicht abschließend geklärt, welche genauen mikrophysikalischen und chemischen Prozesse zur Senkung des Diamantverschleißes dem erfindungsgemäßen Verfahren zu Grunde liegen. Gemäß einem ersten Erklärungsmodell wird durch das neuartige Verfahren in der zu bearbeitenden Randschicht die Affinität der in dieser Zone vorhandenen chemischen Elemente - üblicherweise das Eisen im Stahl - zu Diamant derart herabgesetzt, dass eine Graphitisierung des Diamanten bei der nachfolgenden Mikrozerspanung deutlich weniger auftritt als ohne die erfindungsgemäße thermochemische Behandlung. Infolge dessen wird der Verschleiß des Diamantwerkzeugs deutlich reduziert. Im Rahmen der vorliegenden Erfindung ist ein Schneidkantenverschleiß erzielbar, der mindestens zwei Größenordnungen geringer ist als bei der Bearbeitung eines nicht thermochemisch behandelten Werkstoffs.

Unter Mikrozerspanung sollen im Rahmen der Erfindung alle derartigen, auch konventionellen Bearbeitungsverfahren gefasst werden, deren Ergebniswerkstücke - eine hohe Form-, Maß- und Oberflächenqualität besitzen. Insbesondere werden darunter spanende Fertigungsverfahren wie beispielsweise Drehen, Fräsen oder Schleifen verstanden.

Das zu bearbeitende Werkstück kann dabei aus Übergangsmetallen der Nebengruppen IV. - VIII., insbesondere Eisen, Nickel, Chrom, Vanadium, Molybdän, Titan, Wolfram, Kobalt oder einer - auch durch Sintern hergestellten - Legierung auf Basis dieser Metalle bestehen. Sämtliche Stahlsorten, unter Umständen als Legierungen auf Basis dieser Metalle, sind ebenfalls eingeschlossen.

Was das Diamantwerkzeug angeht, das in der Zerspanungsvorrichtung eingesetzt wird, so weist dieses üblicherweise einen monokristallinen Diamanten als Schneidstoff auf. Alternativ kann als Schneidstoff auch polykristalliner Diamant oder eine mit Diamant beschichtete Trägerplatte - beispielsweise aus Hartmetall - verwendet werden. Darüber hinaus kann der Schneidstoff auch aus mono- oder polykristallinem CBN oder aus einer mit CBN beschichteten Trägerplatte aufgebaut sein.

Mit der thermochemischen Randschichtbehandlung wird vorteilhafterweise insbesondere ein Element wie Stickstoff, Bor, Kohlenstoff, Phosphor, Schwefel oder Sauerstoff oder eine Kombination dieser Elemente in die Werkstückrandzone eingebracht und zwar üblicherweise durch ein Verfahren wie Nitrieren, Borieren, Nitrocaburieren, Carbunitrieren, Aufkohlen, Phosphatieren oder Oxidieren oder eine Kombination dieser Verfahren. Denkbar sind im Übrigen alle thermochemischen Verfahren, die zu dem erwünschten Ergebnis führen, nämlich den Verschleiß des Diamantwerkzeugs zu reduzieren.

Wenn die thermochemische Randschichtbehandlung Nitrieren ist, bieten sich Verfahren wie Gasnitrieren, Salzbadnitrieren, Plasmanitrieren oder Lasernitrieren an.

Für die anderen thermochemischen Verfahren bieten sich ebenfalls Prozesse unter Gasatmosphäre mit und ohne Plasmaunterstützung an, insbesondere das Plasmaaufkohlen oder Plasmaborieren.

Die Aufgabe der vorliegenden Erfindung wird auch gelöst durch ein Werkstück aus einem Metall oder einer Metalllegierung, insbesondere Stahl, mit durch Mikrozerspanung bearbeiteter Oberfläche, wobei das Werkstück eine durch eine thermochemische Oberflächenbehandlung wie Nitrieren, Borieren und dergleichen entstandene Randzone aufweist.

Wirtschaftlich besonders sinnvoll ist es, wenn das Werkstück ein Formwerkzeug für den optischen Formbau ist, insbesondere zur Produktion von asphärischen Optiken, optischen Komponenten mit Freiformflächen sowie Prismenarrays aus Kunststoff oder Glas. Gerade im optischen Formbau wird angestrebt, Formwerkzeuge zur Herstellung von komplizierten Optiken aus widerstandfähigem Material wie Werkzeugstahl herzustellen. Dies war vor dieser Erfindung nur unter hohen Kosten möglich.

Das Werkstück kann aber auch eine mechanische Präzisionskomponente sein, insbesondere eine Lagerschale für Luftlager, ein Ventilsitz für hochbeanspruchte hydraulische Stellglieder, ein hochbeanspruchtes Präzisionsführungselement, eine Lagerschale für hoch genaue Kugellager oder ein korrosionsbeständiger Metallspiegel. Die Erfindung ist natürlich nicht auf diese aufgeführten Beispiele beschränkt.

Weitere Merkmale der Erfindung ergeben sich aus der folgenden Beschreibung eines Ausführungsbeispieles anhand der beigefügten Zeichnung sowie aus den beiliegenden Unteransprüchen.

Es zeigt dabei:

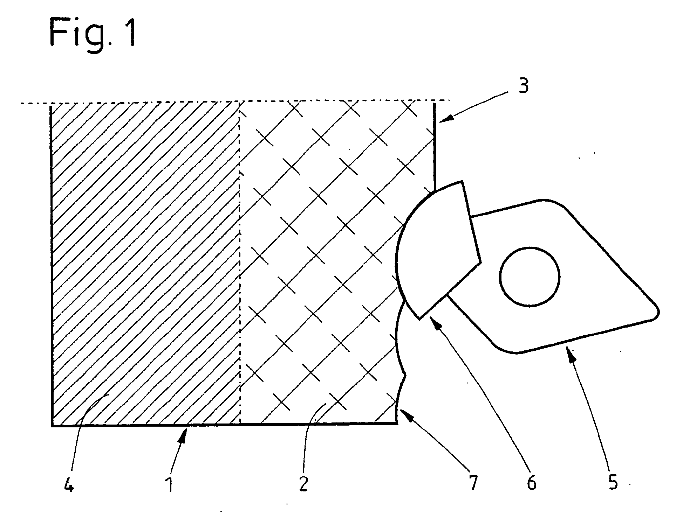

- Fig. 1: eine Prinzipskizze eines Plandrehvorgangs eines thermochemisch behandelten Werkstücks.

Eine mikrozerspanende Bearbeitung von Werkstücken aus Stahl mit Diamantwerkzeugen ist im Stand der Technik üblicherweise auf Grund der Graphitisierung des Diamanten bei der Bearbeitung nicht möglich auf Grund des Verschleißes am Diamantwerkzeug. Um diesen Verschleiß zu reduzieren, wird das Werkstück aus Stahl vor der Bearbeitung nitriert.

Bei dem vorliegenden konkreten Ausführungsbeispiel wird in einem ersten Schritt ein Werkstück 1 - eine Ronde mit ca. 60 mm Durchmesser aus dem Stahlwerkstoff Ck45N - bei einer Temperatur von 550°C ca. fünf Stunden gasnitriert. Im Zuge des Gasnitrierens dringt Stickstoff in das Werkstück 1 ein, woraufhin dieses eine Randzone 2 nitrierten Stahlwerkstoffs ausbildet, die sich von der unbearbeiteten Oberfläche 3 des Werkstücks 1 in das Werkstück 1 hineinerstreckt.

An diese Randzone 2 grenzt eine unbehandelte Grundgefügezone 4 aus unverändertem Ck45N an, die durch das Gasnitrieren auf Grund ihrer Tiefe im Werkstück 1 nicht beeinflusst wurde.

In einem zweiten Schritt wird das Werkstück 1 plangedreht und eine Oberfläche 7 in optischer Qualität hergestellt. Schematisch dargestellt ist ein Teil 5 einer Ultrapräzisionsdrehmaschine mit Diamantschneide 6. Die Diamantschneide 6 dringt zur Bearbeitung der Oberfläche bzw. des Oberflächenbereichs des Werkstücks 1 in die thermochemisch behandelte Randschicht 2 des Werkstücks 1 ein.

Für die Diamantschneide 6 wird ein monokristalliner Diamant eingesetzt.

Mit anderen Worten kann die nitrierte Randschicht 2 mit deutlich reduziertem Verschleiß der Diamantschneide 6 bearbeitet werden, wobei auch Strukturen in optischer Oberflächenqualität in die Randschicht 2 eingearbeitet werden können.

Wie beim Nitrieren von Stahl bekannt ist, ist die Härte des Werkstücks 1 in der Randzone 2 höher als im inneren, unbehandelten Werkstückbereich, d.h. der Grundgefügezone 4. Damit sind die Eigenschaften, insbesondere Härte, Verschleißbeständigkeit und Korrosionsbeständigkeit nach dem Nitriervorgang im Bereich der Randschicht gegenüber dem Ausgangszustand verbessert.

Mit dem erfindungsgemäßen Verfahren sind Rauheiten von bis zu Ra ≈10 nm erreichbar. Durch manuelles Nachpolieren sinkt die Rauheit auf Ra ≈ 5 nm.

### Bezugszeichenliste

- 1: Werkstück
- 2: Randzone
- 3: unbearbeitete Oberfläche
- 4: Grundgefügezone
- 5: Teil einer Ultrapräzisionsdrehmaschine
- 6: Diamantschneide
- 7: Oberfläche optischer Qualität

## Patentansprüche

1. Verfahren zum verschleißarmen Mikrozerspanen von Werkstücken aus metallischen Werkstoffen oder Metalllegierungen, insbesondere Stahl, wobei ein Werkstück (1) mit zumindest einer ein Diamantwerkzeug (6) aufweisenden Zerspanungsvorrichtung (5), insbesondere einer Ultrapräzisionsdreh-, -fräs- oder -schleifmaschine mikrozerspanend bearbeitet wird, **dadurch gekennzeichnet, dass** das Werkstück (1) vor der spanenden Bearbeitung in einem ersten Schritt einer thermochemischen Randschichtbehandlung unterworfen wird und dass in einem zweiten Schritt die thermochemisch behandelte Randzone (2) des Werkstücks (1) mit der Zerspanungsvorrichtung (5) bearbeitet wird.

2. Verfahren nach Anspruch 1, **dadurch gekennzeichnet, dass** das Werkstück (1) aus einem Metall der IV. - VIII. Nebengruppe, insbesondere Eisen, Nickel, Chrom, Vanadium, Molybdän, Titan, Wolfram oder Kobalt oder einer insbesondere durch Sintern hergestellten Legierung auf Basis dieser Metalle besteht.

3. Verfahren nach Anspruch 1, **dadurch gekennzeichnet, dass** durch die thermochemische Oberflächenbehandlung zumindest Bor, Stickstoff, Kohlenstoff, Sauerstoff, Phosphor, Schwefel in die Werkstückrandzone (2) eingebracht werden.

4. Verfahren nach Anspruch 1, **dadurch gekennzeichnet, dass** die thermochemische Oberflächenbehandlung Nitrieren, Nitrocarburieren, Carbunitrieren, Borieren, Carburieren oder Oxidieren oder eine Kombination dieser Verfahren ist.

5. Verfahren nach Anspruch 1, **dadurch gekennzeichnet, dass** das thermochemische Randzonenbehandlungsverfahren Gasnitrieren, Gascarbunitrieren, Badnitrieren, Plasmanitrieren oder Lasernitrieren ist.

6. Verfahren nach Anspruch 1, **dadurch gekennzeichnet, dass** die Tiefe von mit dem Diamantwerkzeug (6) in das Werkstück (1) eingebrachten Schnitten geringer ist als die Dicke der thermochemisch behandelten Randzone (2).

7. Werkstück aus einem Metall oder einer Metalllegierung, insbesondere Stahl, mit durch Mikrozerspanung bearbeiteter Oberfläche, **dadurch gekennzeichnet, dass** das Werkstück (1) eine durch thermochemische Oberflächenbehandlung wie Nitrieren, Nitrocarburieren, Carbunitrieren, Borieren oder dergleichen entstandene Randzone (2) aufweist.

8. Werkstück nach Anspruch 7, **dadurch gekennzeichnet, dass** das Werkstück (1) ein Formwerkzeug für den optischen Formenbau ist, insbesondere zur Produktion von asphärischen Optiken, optischen Komponenten mit Freiformflächen sowie Prismenarrays aus Kunststoff oder Glas.

9. Werkstück nach Anspruch 7, **dadurch gekennzeichnet, dass** das Werkstück (1) eine mechanische Präzisionskomponente ist, insbesondere eine Lagerschale für Luftlager, ein Ventilsitz für hochbeanspruchte hydraulische Stellglieder, ein hochbeanspruchtes Präzisionsführungselement, eine Lagerschale für hochgenaue Kugellager oder ein korrosionsbeständiger Metallspiegel.

10. Werkstück nach Anspruch 7, **dadurch gekennzeichnet, dass** das Werkstück (1) aus Eisen, Nickel, Chrom, Vanadium, Molybdän, Titan, Wolfram, Kobalt oder einer insbesondere durch Sintern hergestellten Legierung auf Basis dieser Metalle besteht.

11. Werkstück nach Anspruch 7, **dadurch gekennzeichnet, dass** das Werkstück (1) aus hochlegiertem Stahl besteht.

## Claims

1. A process for the low-wear micromachining of workpieces made from metallic materials or metal alloys, in particular steel, in which a workpiece (1) is micromachined using at least one machining apparatus (5) that has a diamond tool (6), in particular an ultraprecision turning, milling or grinding machine, **characterized in that**, prior to the machining, the workpiece (1), in a first step, is subjected to a thermochemical surface layer treatment, and **in that** in a second step the thermochemically treated surface zone (2) of the workpiece (1) is machined using the machining apparatus (5).

2. The process as claimed in claim 1, **characterized in that** the workpiece (1) consists of a metal from transition group IV - VIII, in particular iron, nickel, chromium, vanadium, molybdenum, titanium, tungsten or cobalt, or an alloy based on these metals produced in particular by sintering.

3. The process as claimed in claim 1, **characterized in that** the thermochemical surface treatment introduces at least boron, nitrogen, carbon, oxygen, phosphorus, sulphur into the workpiece surface zone (2).

4. The process as claimed in claim 1, **characterized in that** the thermochemical surface treatment is nitriding, nitrocarburizing, carbonitriding, boronizing, carburizing or oxidizing or a combination of these processes.

5. The process as claimed in claim 1, **characterized in that** the thermochemical surface zone treatment process is gas nitriding, gas carbonitriding, bath nitriding, plasma nitriding or laser nitriding.

6. The process as claimed in claim 1, **characterized in that** the depth of cuts introduced into the workpiece (1) using the diamond tool (6) is less than the thickness of the thermochemically treated surface zone (2).

7. A workpiece made from a metal or a metal alloy, in particular steel, with a surface which has been machined by micromachining, **characterized in that** the workpiece (1) has a surface zone (2) formed by thermochemical surface treatment, such as nitriding, nitrocarburizing, carbonitriding, boronizing or the like.

8. The workpiece as claimed in claim 7, **characterized in that** the workpiece (1) is a moulding tool for optical mould making, in particular for the production of aspheric optics, optical components with free-form surfaces and prism arrays made from plastic or glass.

9. The workpiece as claimed in claim 7, **characterized in that** the workpiece (1) is a precision mechanical component, in particular a bearing shell for air bearings, a valve seat for highly loaded hydraulic actuators, a highly loaded precision guide element, a bearing shell for high-precision ball bearings or a corrosion-resistant metal mirror.

10. The workpiece as claimed in claim 7, **characterized in that** the workpiece (1) consists of iron, nickel, chromium, vanadium, molybdenum, titanium, tungsten, cobalt, or an alloy based on these metals produced in particular by sintering.

11. The workpiece as claimed in claim 7, **characterized in that** the workpiece (1) consists of high-alloy steel.

## Revendications

1. Procédé de micro-enlèvement à faible usure de copeaux de pièces en matériaux métalliques ou en alliages métalliques, en particulier en acier, dans lequel on usine une pièce (1) par micro-enlèvement de copeaux avec au moins un dispositif d'enlèvement de copeaux (5) présentant un outil au diamant (6), en particulier une machine de tournage, de fraisage ou de meulage d'ultra-précision, **caractérisé en ce que** l'on soumet la pièce (1), dans une première étape avant l'usinage par enlèvement de copeaux, à un traitement thermochimique de la couche superficielle et **en ce que** l'on usine, au cours d'une deuxième étape, la zone superficielle (2) de la pièce (1), qui a subi le traitement thermochimique, avec le dispositif d'enlèvement de copeaux (5).

2. Procédé selon la revendication 1, **caractérisé en ce que** la pièce (1) se compose d'un métal du sous-groupe IV-VIII, en particulier de fer, nickel, chrome, vanadium, molybdène, titane, tungstène ou cobalt ou d'un alliage à base de ces métaux, fabriqué notamment par frittage.

3. Procédé selon la revendication 1, **caractérisé en ce que** l'on introduit par le traitement de surface thermochimique au moins du bore, de l'azote, du carbone, de l'oxygène, du phosphore, du soufre dans la zone superficielle (2) de la pièce.

4. Procédé selon la revendication 1, **caractérisé en ce que** le traitement de surface thermochimique est la nitruration, la nitrocarburation, la carbonitruration, la boruration, la carburation ou l'oxydation ou une combinaison de ces procédés.

5. Procédé selon la revendication 1, **caractérisé en ce que** le procédé de traitement thermochimique de la zone superficielle est la nitruration en phase gazeuse, la carbonitruration en phase gazeuse, la nitruration en bain de sels, la nitruration au plasma ou la nitruration au laser.

6. Procédé selon la revendication 1, **caractérisé en ce que** la profondeur des coupes pratiquées dans la pièce (1) avec l'outil au diamant (6) est inférieure à l'épaisseur de la zone superficielle (2) ayant subi le traitement thermochimique.

7. Pièce en un métal ou un alliage métallique, en particulier en acier, avec une surface usinée par micro-enlèvement de copeaux, **caractérisée en ce que** la pièce (1) présente une zone superficielle (2) obtenue par un traitement de surface thermochimique tel que nitruration, nitrocarburation, carbonitruration, boruration ou analogue.

8. Pièce selon la revendication 7, **caractérisée en ce que** la pièce (1) est un outil de formage pour la construction de formes optiques, en particulier pour la production d'optiques asphériques, de composants optiques avec des faces de forme libre ainsi que de réseaux de prismes en matière plastique ou en verre.

9. Pièce selon la revendication 7, **caractérisée en ce que** la pièce (1) est un composant mécanique de précision, en particulier une coquille de coussinet pour un palier à air, un siège de soupape pour des organes de réglage hydrauliques fortement sollicités, un élément de guidage de précision fortement sollicité, une coquille de coussinet pour des roulements à billes de haute précision ou un miroir métallique résistant à la corrosion.

10. Pièce selon la revendication 7, **caractérisée en ce que** la pièce (1) se compose de fer, nickel, chrome, vanadium, molybdène, titane, tungstène, cobalt ou d'un alliage à base de ces métaux, fabriqué notamment par frittage.

11. Pièce selon la revendication 7, **caractérisée en ce que** la pièce (1) se compose d'acier fortement allié.
